# EUROPÄISCHE PATENTSCHRIFT

(11) **EP 1 935 473 B1**
(45) Veröffentlichungstag und Bekanntmachung des Hinweises auf die Patenterteilung: **09.02.2011**
(21) Anmeldenummer: 07118887.4
(22) Anmeldetag: 19.10.2007
(51) Int. Cl.: B01D 46/12

(54) **Einrichtung zum Abscheiden von Flüssigkeit aus einem mit Flüssigkeitströpfchen befrachteten Fluidstrom**
Device for separating liquid from a fluid flow charged with liquid drops
Dispositif destiné à séparer un liquide d'un flux fluidique chargé de gouttelettes de liquide

(30) Priorität: 22.12.2006 EP 06127169
(43) Veröffentlichungstag der Anmeldung: 25.06.2008
(73) Patentinhaber: Sulzer Chemtech AG, 8404 Winterthur (CH)
(72) Erfinder: Egger, Daniel, 8405, Winterthur (CH)
(74) Vertreter: Gernet, Samuel Andreas

(56) Entgegenhaltungen:
- FR-A- 2 599 273
- US-A- 3 022 859
- US-A- 3 066 462
- US-A- 3 403 498

## Beschreibung

Die Erfindung betrifft eine Einrichtung oder einen Apparat zum Abscheiden von Flüssigkeit aus einem mit Flüssigkeitströpfchen befrachteten Fluidstrom gemäss Oberbegriff von Anspruch 1 sowie ein Verfahren zur Durchführung dieser Tröpfchenabscheidung. Das Fluid ist ein Gas oder eine zweite Flüssigkeit, deren Dichte kleiner als jene der abzuscheidenden Flüssigkeit ist.

In der Oel- und Gas-Industrie ist bei der Behandlung von Zwei- oder MehrPhasen-Gemischen, die in einer gasförmigen Phase eine diskrete Phase in Form von wässrigen Tröpfchen enthalten, oft eine Trennung der Phasen notwendig. In dazu verwendeten Separatoren lassen sich Trennverfahren unter Nutzung der Gravitationskraft und/oder der Trägheitskraft in Form von Zentrifugalkräften durchführen. Bei beiden Verfahrensarten wird der mit Flüssigkeitströpfchen befrachtete Gasstrom, der Fluidstrom, an eine Abscheideoberfläche geführt, an der einerseits durch einfache Umlenkung der Strömung oder andererseits durch Induzieren einer Drallströmung eine Abscheidung erfolgt.

Das Dokument US 3 022 859 zeigt eine Vorrichtung, in welcher ein Gasstrom zuerst mit einer Flüssigkeit beladen wird, wozu eine Flüssigkeitsverteilungsplatte im Gasstrom angeordnet ist, auf welcher sich ein Flüssigkeitsfilm befindet. Das Gas strömt durch Öffnungen in der Flüssinkeitsverteilungsplatte und reisst Flüssigkeit mit. Oberhalb der Flüssigkeitsverteilungsplatte befindet sich ein Kontaktabschnitt, in welchem es zu einem eingehenden Kontakt zwischen dieser mitgerissenen Flüssigkeit und der Gasphase kommt. In diesem Kontaktabschnitt werden Flüssigkeitströpfchen im Gasstrom gebildet. Diese Flüssigkeitströpfchen werden im stromabwärts (hier oberhalb gezeichnet) liegenden Abscheideabschnitt wieder getrennt. Die Flüssigkeitströpfen bleiben in den siebartigen Gewebeschichten hängen und bewegen sich durch die Schwerkraft in diesen siebartigen Gewebeschichten in Richtung der Behälterwand. Zwischen den Gewebeschichten befinden sich Abstandselemente, welche Kanäle zwischen den Gewebeschichten ausbilden, entlang derer Flüssigkeitströpfchen, die aus dem Gasstrom abgetrennt worden sind, abgeleitet werden sollen.

Es gibt im Wesentlichen zwei Einflussfaktoren bezüglich der Wirksamkeit der Separatoren. Einerseits hat die Tropfengrösse einen Einfluss: Je kleiner die Tropfen in der Zweiphasenströmung sind, desto schwieriger ist es, diese aus dem Fluidstrom zu den Abscheideoberflächen zu transportieren; denn erst bei grösseren Tropfen bewirkt die Trägheit eine genügend grosse Ablenkung. Der zweite wesentliche Einfluss auf die Wirksamkeit ist die Wiederablösung von Tropfen aus einem auf den Abscheideoberflächen befindlichen Flüssigkeitsfilm aufgrund einer grossen Geschwindigkeit des Fluidstroms. Die Dicke des Flüssigkeitsfilmes auf der Oberfläche der Abscheidestruktur beeinflusst zum einen die für den Fluidstrom zur Verfügung stehende freie Durchströmfläche. Zum anderen nimmt die Stabilität des Filmes mit zunehmender Dicke ab: Eine Wellenbildung auf dem Flüssigkeitsfilm kann zu einem Tropfenabriss führen.

Eine Erhöhung der Flüssigkeitsmenge bzw. des Fluidstroms führt zum Fluten des Separators und damit zu dessen Kapazitätsgrenze. Die Effizienz des Abscheidevorganges nimmt im Bereich der Kapazitätsgrenze drastisch ab. Da die Kapazität durch die Dicke des Filmes auf der Abscheideoberfläche und die Fluidgeschwindigkeit begrenzt wird, ist es vorteilhaft, die Filmdicke zu verringern und damit die Kapazität der Abscheideeinrichtung zu erhöhen.

Aus der US-A- 4744806 ist eine Abscheidestruktur bekannt, mit der Flüssigkeitströpfchen aus einem Fluidstrom separierbar sind. Diese Abscheidestruktur hat quer zur Strömungsrichtung einen heterogenen Aufbau: In Hauptzonen mit einer grösseren Dichte der Abscheidestruktur wird überwiegend Flüssigkeit separiert, während in Nebenzonen mit kleinerer Dichte, die zwischen den Hauptzonen angeordnet sind, abgeschiedene und in diese Nebenzonen eintretende Flüssigkeit im Gegenstrom zum Fluidstrom abfliesst. Die Drainage mittels der Nebenzonen ermöglicht eine Verringerung der Filmdicke in den Hauptzonen, wodurch deren Kapazität erhöht wird.

Aufgabe der Erfindung ist es, eine weitere Einrichtung zu schaffen, mit der Flüssigkeit aus einem mit Flüssigkeitströpfchen befrachteten Fluidstrom separierbar ist. Diese Aufgabe wird durch die im Anspruch 1 definierte Einrichtung gelöst, die ein Mehrstufen-Tröpfchenabscheider ist.

Die Einrichtung dient zum Abscheiden von Flüssigkeit aus einem mit Flüssigkeitströpfchen befrachteten Fluidstrom, der im Gegenstrom zu abgeschiedener Flüssigkeit durch Abscheidestrukturen leitbar ist. Abgeschiedene Flüssigkeit fliesst auf Oberflächen der Abscheidestrukturen ab. Die Abscheidestrukturen bilden mindestens zwei Stufen. Jede Abscheidestruktur weist eine Eintrittsfläche für den Eintritt des Fluidstroms auf, die tiefer liegend als eine entsprechende Austrittsfläche angeordnet ist. Bei einer Mehrzahl der Stufen ist jeweils an deren Eintrittsfläche ein Sammler für aus der Stufe rückfliessende Flüssigkeit vorgesehen. Die Sammler sind jeweils über einen Sammelkanal an eine Sammelleitung angeschlossen.

Die abhängigen Ansprüche 2 bis 7 betreffen vorteilhafte Ausführungsformen der erfindungsgemässen Einrichtung. Anspruch 8 bezieht sich auf einen Apparat, der diese Einrichtung, d.h. einen Mehrstufen-Tröpfchenabscheider umfasst. Ein Verfahren zum Betreiben der Einrichtung ist Gegenstand der Ansprüche 9 bis 13.

Nachfolgend wird die Erfindung anhand der Zeichnungen erläutert. Es zeigen:
- Fig. 1: einen erfindungsgemässen Mehrstufen-Tröpfchenabscheider,
- Fig. 2: ein Beispiel zu einem Flüssigkeitssammler, von unten gesehen,
- Fig. 3: Schnitt durch den Sammler der Fig. 2 und
- Fig. 4: einen Apparat, der eine weitere Ausführungsform des erfindungsgemässen Mehrstufen-Tröpfchenabscheiders umfasst.

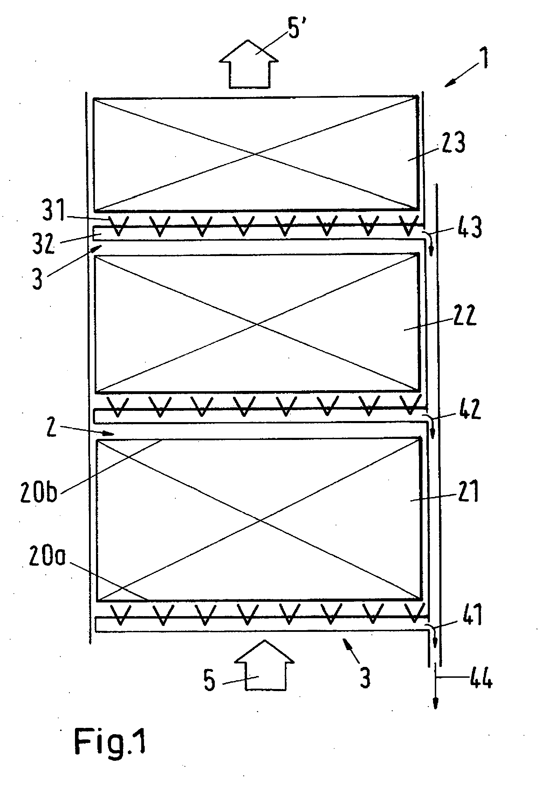

Der in Fig. 1 dargestellte Mehrstufen-Tröpfchenabscheider ist eine erfindungsgemässe Einrichtung 1 zum Abscheiden von Flüssigkeit aus einem mit Flüssigkeitströpfchen befrachteten Fluidstrom 5. Dieser Fluidstrom 5, der in der Regel ein Gasstrom ist, wird durch Abscheidestrukturen 2 geleitet, in denen jeweils abgeschiedene Flüssigkeit im Gegenstrom auf Oberflächen der Abscheidestruktur 2 fliesst. Die Oberflächen sind bezüglich der abzuscheidenden Flüssigkeit benetzbar. Die Abscheidestrukturen 2 bilden beim gezeigten Beispiel drei Stufen 21, 22 und 23. Jede Abscheidestruktur 2 weist eine Eintrittsfläche 20a für den Eintritt des Fluidstroms 5 auf, die tiefer liegt als eine entsprechende Austrittsfläche 20b. An den Eintrittsflächen 20a ist jeweils ein Sammler 3 für aus der Abscheidestruktur 2 rückfliessende Flüssigkeit vorgesehen. Jeder Sammler 3, der Sammelelemente 31 umfasst, ist über einen Sammelkanal 32 an eine Sammelleitung 4 ausserhalb der Abscheidestruktur 2 angeschlossen. Aus den drei Stufen 21, 22 und 23 treten Flüssigkeitsströme 41, 42 und 43 in die Sammelleitung 4 ein, wo sie sich zu einem Flüssigkeitsstrom 44 vereinen. Im Mehrstufen-Tröpfchenabscheider 1 entsteht aus dem nassen Fluidstrom 5 einerseits ein trockener Fluidstrom 5' und andererseite der Strom 44 der separierten Flüssigkeit.

Liegt eine Vielzahl von Stufen vor, so können bei einzelnen der Stufen Sammler 3 fehlen. Beim Fehlen eines Sammlers 3 fliesst die abgeschiedene Flüssigkeit in die bezüglich dem Fluidstrom 5 stromaufwärts anschliessende Stufe weiter. Hat diese anschliessende Stufe eine genügend grosse Aufnahmekapazität für abgeschiedene Flüssigkeit, so wird die Funktionstüchtigkeit der erfindungsgemässen Einrichtung 1 wegen der zusätzlichen Belastung durch die stromabwärts folgende Stufe nicht wesentlich beeinträchtigt. Da allerdings die grosse Aufnahmekapazität für abgeschiedene Flüssigkeit in der Regel eine reduzierte Separierfähigkeit zur Folge hat, ist es von Vorteil, wenn alle Stufen mit Sammler 3 ausgestattet sind.

Die Separierfähigkeit hängt in einer nicht linearen Weise von der Menge an durch die Abscheidestruktur 2 aufgenommenen Flüssigkeit ab. So kann eine teilweise geflutete Abscheidestruktur 2 eine bessere Separierfähigkeit, insbesondere hinsichtlich sehr kleinen Flüssigkeitströpfchen aufweisen. (Das Fluten ist der Betriebspunkt, bei dem ein signifikanter Tropfenmitriss zur nächsten Stufe erfolgt und ein Aufbau eines Holdup von Flüssigkeit im Abscheideelement vorliegt.) In einem solchen Fall kann das Fehlen eines Sammlers 3, das zu einem Fluten führt, auch vorteilhaft sein. Ob vorteilhaft oder nicht hängt von der Wahl der Abscheidestrukturen 2 und vom Spektrum der Tröpfchengrössen im Fluidstrom 5 ab.

Die Abscheidestrukturen 2 bestehen beispielsweise jeweils aus einem Haufwerk von Abscheideelementen und/oder einem Stapel von Lagen, die aus Draht, insbesondere Metalldraht gewoben oder gestrickt sind. Bei einer weiteren Ausführungsform der erfindungsgemässen Einrichtung 1 umfasst mindestens eine Stufe eine geordnete Packung, die beispielsweise eine Kreuzkanalstruktur bildet. Diese Packung besteht aus mindestens einem Lagenbund aus gewellten oder zick-zack-förmig gefalteten Folien. Die Lagen sind vertikal ausgerichtet und bilden geneigte Strömungskanäle. Die Strömungskanäle benachbarter Lagen kreuzen sich und sind gegeneinander offen.

Die Abscheidestrukturen 2 haben in der Regel verschieden grosse spezifische Oberflächen (oder Dichten). Insbesondere nimmt die spezifische Oberflächen mit Vorteil in Fliessrichtung des Fluidstroms 5 zu.

Der Sammler 3 ist aus einer Vielzahl von Sammelelementen 31 zusammen gesetzt. Es lassen sich zwei vorteilhafte Typen von Sammlern 3 unterscheiden:
Der erste Typ ist in Fig. 1 angedeutet. Die Sammelelemente 31 sind parallel angeordnete Sammelrinnen, zwischen denen Lücken für einen direkten Eintritt des Fluidstroms 5 in die Abscheidestruktur 2 vorgesehen sind. Unmittelbar über der Eintrittsfläche 20a bildet sich ein Strömungsmuster aus, aufgrund dem die abgeschiedene Flüssigkeit auf leeseitige Zonen hinter den Sammelelementen 31 abgedrängt wird, wo die Flüssigkeit unbehindert durch die Strömung des Fluids in die Sammelelemente 31 abfliessen kann.

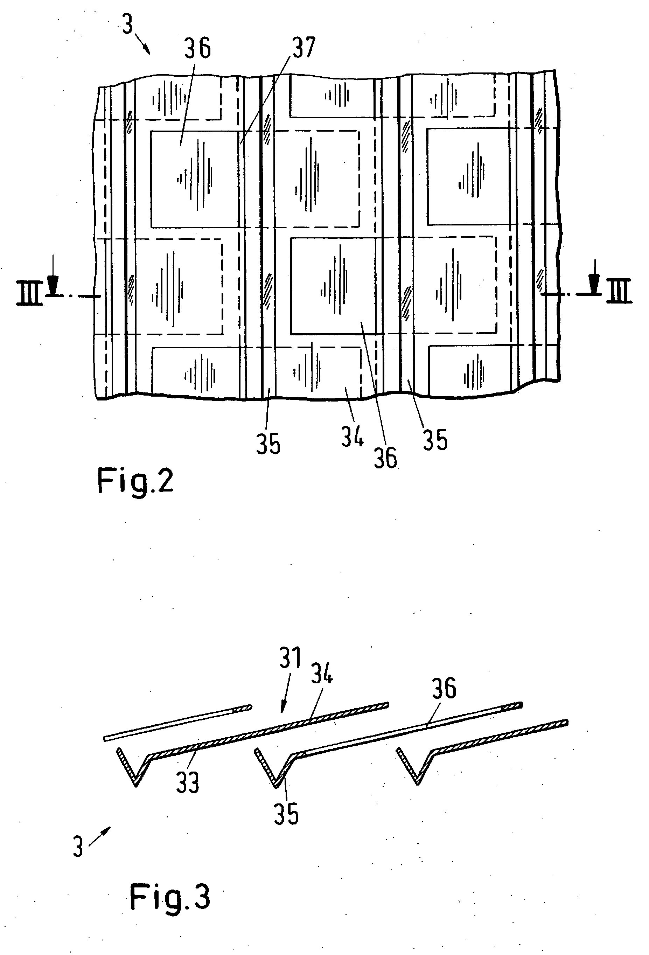

Beim zweiten Typ des Sammlers 3, der anhand der Figuren 2 und 3 illustriert ist, umfasst jedes Sammelelement 31 mindestens eine Sammelfläche 34 und zu einem Sammelkanal führende Sammelrinne 35. Man beachte, dass in Fig. 2 der Sammler 3 mit Blick auf die vom Fluidstrom 5 angeströmte Unterseite dargestellt ist. Der Sammler 3 weist Durchtrittsöffnungen 36 oder Lücken für den Fluidstrom 5 auf, die über die Eintrittsfläche 20a der zugeordneten Abscheidestruktur 2 verteilt sind. Ein direkter Durchtritt des Fluidstroms 5 durch die Sammelelemente 31 wird jeweils aufgrund eines umlenkenden Flächenteils 33 des benacharten Sammelelements ganz oder teilweise - mindestens zu 50% - verhindert. In Fig. 2 ist ein direkter Durchtritt nur in einem schmalen Streifen 37 möglich. Ähnlich wie beim Sammler 3 der Fig. 1 könnte der direkte Durchtritt auch grösser als in Fig. 2 sein, ohne dass dies sich ungünstig auswirken würde.

Der Sammler 3 hat aufgrund von Umlenkungen des Fluidstroms zusätzlich zur Sammelfunktion eine Abscheidefunktion. Dies gilt für beide der oben beschriebenen Sammlertypen, insbesondere für den ersten Typ. Beim zweiten Typ können zusätzliche, die Strömung beeinflussende Strukturelemente auf den Sammelflächen 34 oder zwischen diesen als Abscheidemittel wirken.

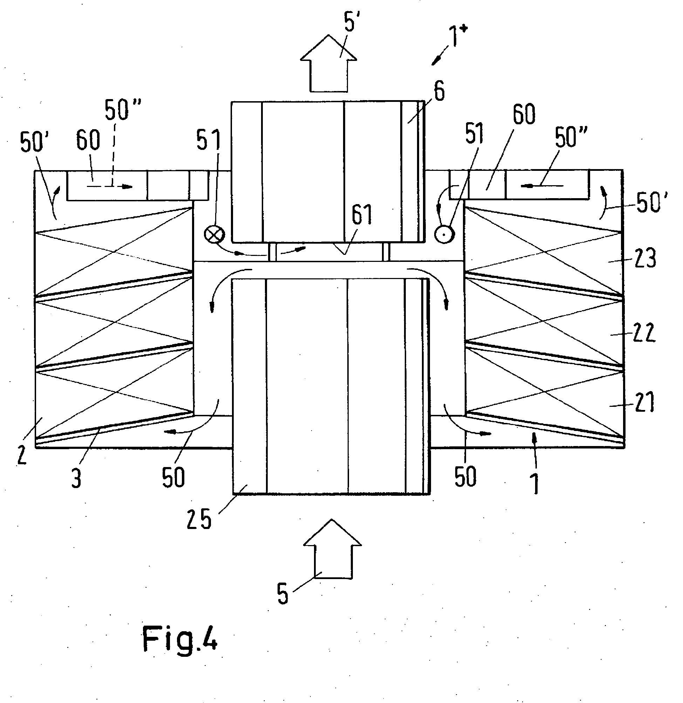

Fig. 4 zeigt einen Apparat 1⁺, der eine weitere Ausführungsform der erfindungsgemässen Einrichtung 1 ist und der mindestens eine zusätzliche Abscheidestufe 6 umfasst, wobei die zusätzliche Stufe 6 nach einem anderen Wirkprinzip arbeitet. Der Apparat 1 ⁺ enthält auch eine Eintrittsstufe 25, in der Abscheidestrukturen und Flüssigkeitssammler gemäss der Erfindung angeordnet sein können. Die Eintrittsstufe 25 kann aber auch andere Einbauten enthalten, beispielsweise Coalescer zur Beeinflussung des Grössenspektrums der vom Fluidstrom 5 mitgeführten Tröpfchen. Der Apparat 1⁺ hat einen zentralsymmetrischen Aufbau. Der Tröpfchenabscheider 1 umfasst wieder drei Stufen 21, 22 und 23, die hier aber aus ringförmigen Abscheidestrukturen 2 und Sammlern 3 gebildet sind. Die Anzahl der Stufen kann selbstverständlich auch 2 oder grösser als 3 sein.

Die Strömung des zu behandelnden Fluids ist durch Pfeile 50 , 50', 50" und 51 angedeutet. Nach der Passage des Tröpfchenabscheiders 1 wird die Strömung 50' des Fluids, das immer noch mit einem Rest an Flüssigkeit befrachtet ist, radial zum Zentrum und durch Schaufeln 60 geleitet (Pfeil 50") und dabei in eine Wirbelströmung 51 versetzt. Die Wirbelströmung 51 tritt durch eine Öffnung am Boden 61 der Abscheidestufe 6 in einen Bereich ein, in dem der Rest an Flüssigkeit mittels einer geeignet ausgebildeten Struktur und unter Nutzung von Zentrifugalkräften weiter reduziert wird. Eine derartige Zentrifugalabscheidung ist - wie im gezeigten Beispiel - vorzugsweise als eine abschliessende Stufe vorzusehen.

Bei einem Verfahren zum Betreiben eines erfindungsgemässen Mehrstufen-Tröpfchenabscheiders 1 kann die Abscheidung beispielsweise in einer ersten Stufe bei zumindest teilweise gefluteter Abscheidestruktur durchgeführt werden. Bei diesem Vorgehen wird eine kontinuierliche Phase, die durch abgeschiedene Flüssigkeit gebildet ist, vom Fluidstrom 5 als diskrete Phase in Form von Blasen passiert. Kleine Tröpfchen können sich so in den einzelnen Blasen an deren Oberflächen niederschlagen.

Der Fluidstrom kann derart bemessen werden, dass in höher flüssigkeitsbeladenen Stufen der Druckabfall einen Wert erreicht, der zum Fluten führt.

Bei einer besonderen Anwendung des erfindungsgemässen Verfahrens kann es erforderlich sein, dass zwischen dem nassen, abzuscheidende Flüssigkeit enthaltenden Fluidstrom 5 und dem trockenen, keine abzuscheidende Flüssigkeit enthaltenden Fluidstrom 5' ein Druckunterschied besteht, der nicht zu gross ist. In diesem Fall und beispielsweise mit dem Apparat 1⁺ kann folgendermassen vorgegangen werden: Im Apparat 1⁺ wird der gesamte Druckabfall eines trockenen Fluidstroms als Funktion von dessen Volumenstrom gemessen. Der Apparat 1⁺ wird dann mit einem nassen Fluidstrom 5 betrieben, für den ein Druckabfall auftritt, der nicht den doppelten Wert des entsprechenden Druckabfalls des trockenen Fluidstroms oder einen anderen vorgegebenen Wert übersteigt. Bei einem Übersteigen des vorgegebenen Werts wird der nasse Fluidstrom 5 so reduziert, dass die genannte Bedingung erfüllt ist.

In der erfindungsgemässen Einrichtung 1, die eine Anordnung von in Strömungsrichtung hintereinander geschalteten Abscheidestrukturen ist, wird durch die zwischenstufliche Flüssigkeitsabführung die Dicke des Flüssigkeitsfilms auf den Oberflächen der Abscheidestrukturen verringert. Ein Wiederablösen von Tropfen, welches ab einer bestimmten Flüssigkeitsfilmdicke auftritt, erfolgt nun erst bei höheren Flüssigkeits- bzw. Gasströmen. Ausserdem wird eine hydraulische Entkopplung der einzelnen Stufen erreicht, da die abgescheidene Flüssigkeit nicht mehr sämtliche im Gasstrom davor befindlichen Stufen durchströmt.

Der durch die erfindungsgemässe Einrichtung 1 ermöglichte Vorteil ist eine Kontrolle des Flüssigkeitsfilmes auf den Abscheideoberflächen durch die Wahl einer passenden Dichte (spezifische Oberfläche) der Abscheidestruktur, verbunden mit einer separaten Sammlung und Abführung der Flüssigkeit. Es ist auch möglich, gezielt eine Koaleszenz beispielsweise durch teilweises Fluten der Abscheidestruktur zu erreichen, beispielsweise durch das Weglassen der Flüssigkeitsabführung auf einer Stufe, so dass entkoppelt davon auf der nächsten Stufe die Separation der Tropfen stattfinden kann.

Ein Fluten der untersten Stufe kann im Sinne einer möglichst platzsparenden Anordnung als vorteilhaft vorgesehen werden, wenn die im Fluidstrom 5 stromabwärts liegenden Teile der Abscheideeinrichtung die erforderliche Abscheideeffizienz sicherstellen. Die Versperrung des Querschnitts für das Fluid durch eine Sprudelschicht, die sich aufgrund des Flutens ausbildet, hat oft einen positiven Effekt, da auch feinste Flüssigkeitströpfchen an der Flüssigkeitsoberfläche koaleszieren. Die Tropfenerzeugung durch Abriss aus dem Flüssigkeitsfilm unterliegt dabei meist einem anderen Mechanismus als die Tropfenerzeugung der Tröpfchen, die mit dem Fluidstrom 5 in die Einrichtung 1 eingespeist werden. Die beim Abriss entstehenden Tropfen können signifikant grösser sein als die Tröpfchen und lassen sich somit in der nachfolgenden Stufe leichter abscheiden.

## Patentansprüche

1. Einrichtung (1) zum Abscheiden von Flüssigkeit aus einem mit Flüssigkeitströpfchen befrachteten Fluidstrom (5), der im Gegenstrom zu abgeschiedener Flüssigkeit durch Abscheidestrukturen (2) leitbar ist, wobei abgeschiedene Flüssigkeit auf Oberflächen der Abscheidestrukturen (2) abfliesst, die Abscheidestrukturen (2) mindestens zwei Stufen (21, 22) bilden und jede Abscheidestruktur (2) eine Eintrittsfläche (20a) für den Eintritt des Fluidstroms (5) aufweist, die tiefer liegend als eine entsprechende Austrittsfläche (20b) angeordnet ist,
**dadurch gekennzeichnet, dass** eine erste Stufe (21) vorgesehen ist, an deren Eintrittsfläche (20a) ein Sammler (3) für aus der ersten Stufe (21) rückfliessende Flüssigkeit (41) vorgesehen ist sowie eine zweite Stufe (22) vorgesehen ist, an deren Eintrittsfläche ein Sammler (3) für aus der zweiten Stufe (22) rückfliessende Flüssigkeit (42) vorgesehen ist und dass die Sammler(3) jeweils über einen Sammelkanal (32) an eine Sammelleitung (4) angeschlossen sind, wobei der Sammler (3) aus einer Vielzahl von Sammelelementen (31) zusammengesetzt ist, wobei die Sammelelemente (31) parallel angeordnete Sammelrinnen (35) sind, zwischen denen Durchtrittsöffnungen oder Lücken (36) für einen direkten Eintritt des Fluidstroms in die Abscheidestruktur (2) vorgesehen sind.

2. Einrichtung nach Anspruch 1, wobei die Abscheidestrukturen (2) jeweils aus einem Haufwerk von Abscheideelementen und/oder einem Stapel von Lagen bestehen, die aus Draht, insbesondere Metalldraht, gewoben oder gestrickt sind.

3. Einrichtung nach Anspruch 1 oder 2, wobei mindestens eine Stufe eine geordnete Packung umfasst, wobei diese Packung insbesondere eine Kreuzkanalstruktur bildet, mit einem Lagenbund aus gewellten oder zick-zack-förmig gefalteten Folien, die geneigte Strömungskanäle in vertikal ausgerichteten Lagen bilden, wobei die Strömungskanäle benachbarter Lagen sich offen kreuzen.

4. Einrichtung nach einem der Ansprüche 1 bis 3, wobei die Abscheidestrukturen (2) verschieden grosse spezifische Oberflächen haben, wobei insbesondere die spezifische Oberfläche in Fliessrichtung des Fluidstroms (50) zunimmt.

5. Einrichtung nach einem der Ansprüche 1 bis 4, wobei jedes Sammelelement (31) mindestens eine Sammelfläche (34) und die zum Sammelkanal (32) führende Sammelrinne (35) umfasst, der Sammler (3) über die Eintrittsfläche (20a) der zugeordneten Abscheidestruktur verteilt die Durchtrittsöffnungen oder Lücken (36) für den Fluidstrom aufweist und ein direkter Durchtritt des Fluidstroms (5) aufgrund eines umlenkenden Flächenteils (33) des jeweils benachbarten Sammelelements (31) ganz oder bis zu mindestens 50% verhindert ist.

6. Einrichtung nach Anspruch 1 oder 5, wobei der Sammler (3) aufgrund von Umlenkungen des Fluidstroms (5) zusätzlich zur Sammelfunktion eine Abscheidefunktion hat.

7. Einrichtung nach einem der vorhergehenden Ansprüche, wobei die Sammelrinnen (31) als v-förmige Kanäle ausgebildet sind.

8. Apparat (1⁺) umfassend eine Einrichtung (1) gemäss einem der Ansprüche 1 bis 7, **dadurch gekennzeichnet, dass** in einem Bereich der Fluidstrom (50) in eine Wirbelströmung (51) versetzbar ist, so dass Flüssigkeit aufgrund von Zentrifugalkräften in einer geeignet ausgebildeten Struktur abscheidbar ist, wobei eine derartige Zentrifugalabscheidung vorzugsweise in einer abschliessenden Stufe vorgesehen ist.

9. Verfahren zum Betreiben eines Mehrstufen-Tröpfchenabscheiders (1), der eine Einrichtung (1) bzw. Apparat (1⁺) gemäss einem der Ansprüche 1 bis 8 ist, **dadurch gekennzeichnet, dass** in mindestens zwei Stufen (21, 22, 23) abgeschiedene Flüssigkeit mit den Sammlern (3) aufgefangen und aus diesen der Sammelleitung (4) zugeführt wird.

10. Verfahren nach Anspruch 9, **dadurch gekennzeichnet, dass** in mindestens einer Stufe (21) eine Abscheidung bei zumindest teilweise gefluteter Abscheidestruktur (2) durchgeführt wird, wobei eine durch abgeschiedene Flüssigkeit gebildete kontinuierliche Phase vom Fluidstrom als diskrete Phase in Form von Blasen passiert wird.

11. Verfahren nach Anspruch 10, wobei der Fluidstrom derart bemessen wird, dass in den höher flüssigkeitsbeladenen Stufen der Druckabfall einen Wert erreicht, der zum Fluten führt.

12. Verfahren nach einem der Ansprüche 9 bis 11, wobei im Apparat (1 +) der gesamte Druckabfall eines trockenen Fluidstroms als Funktion von dessen Volumenstrom gemessen wird, der Apparat (1+) dann mit einem nassen Fluidstrom (5) betrieben wird, für den ein Druckabfall auftritt, der den doppelten Wert des entsprechenden Druckabfalls des trockenen Fluidstroms nicht übersteigt.

13. Verfahren nach Anspruch 12, wobei bei einem Übersteigen des vorgegebenen Werts der nasse Fluidstrom (5) derart reduziert wird, bis der Druckabfall den doppelten Wert des entsprechenden Druckabfalls des trockenen Fluidstroms nicht übersteigt.

## Claims

1. An apparatus (1) for the separation of liquid out from a fluid flow (5) loaded with liquid droplets, which can be directed through separator structures (2) in counterflow to separated liquid, wherein separated liquid flows away on surfaces of the separator structures (2), the separator structures form at least two stages (21, 22) and each separator structure has an inlet area (20a) for the entry of the fluid flow (5) which is arranged lower than a corresponding outlet area (20b), **characterised in that** a first stage (21) is foreseen and at the inlet area (20a) thereof, a collector (3) is provided for liquid (41) flowing back from the first stage (21), and a second stage (22) is foreseen and at the inlet area thereof, a collector (3) is provided for liquid (42) flowing back from the second stage (22), and **in that** the collectors (3) are each connected to a collection line (4) via a collection passage (32) and **in that** the collector (3) is assembled from a plurality of collection elements (31), wherein the collection elements (31) are collection troughs (35) arranged in parallel, between which passage openings or gaps (36) for a direct entry of the fluid flow into the separator structure (2) are provided.

2. An apparatus in accordance with claim 1, wherein the separator structures (2) are each made of a pile of separation elements and/or of a stack of layers, which are of woven or knitted wire, in particular metal wire.

3. An apparatus in accordance with claim 1 or claim 2, wherein at least one stage includes an ordered packing, wherein this packing in particular forms a crossed channel structure, with a composite layer of corrugated foils or of foils folded in a zigzag shape, which form inclined flow channels in vertically aligned layers, wherein the flow channels of adjacent layers cross each other openly.

4. An apparatus in accordance with any one of the claims 1 to 3, wherein the separator structures (2) have specific surface areas of different sizes, with the specific surface areas increasing in particular in the flow direction of the fluid flow (50).

5. An apparatus in accordance with any one of the claims 1 to 4, wherein each collection element (31) includes at least one collection surface (34) and the collection trough (35) leading to the collection passage (32), the collector (3) having the passage openings or gaps (36) for the fluid flow distributed over the inlet area (20a) of the associated separator structure and a direct passage of the fluid flow (5) being prevented completely or up to at least 50% by deflecting surface parts (33) of adjacent collection elements (31).

6. An apparatus in accordance with claim 1 or 5, wherein the collector (3) has a separation function in addition to the collection function as a result of deflections of the fluid flow (5).

7. An apparatus according to any one of the preceding claims, wherein the collection elements (31) are formed as v-shaped passages.

8. A device (1+) with an apparatus (1) in accordance with any one of the claims 1 to 7, **characterised in that** in one region the fluid flow (50) can be set into a vortex flow (51), so that liquid can be separated in a suitably designed structure due to centrifugal forces, with a centrifugal separation of this kind preferably being provided in a final stage.

9. A method for the operation of a multi-stage droplet separator (1) which is an apparatus (1) or device (1+) in accordance with any one of the claims 1 to 8, **characterised in that** liquid separated in at least two stages (21, 22, 23) is collected by the collectors (3) and supplied from them to the collection line (4).

10. A method in accordance with claim 9, **characterised in that** in at least one stage (21) a separation is carried out with an at least partially flooded separator structure (2), wherein a continuous phase of the fluid flow formed by separated liquid is passed as a discrete phase in the form of bubbles.

11. A method in accordance with claim 10, wherein the fluid flow is measured in such a way that in the stages with a higher load of liquid the pressure drop reaches a value, which leads to flooding.

12. A method in accordance with one of claims 9 to 11, wherein in the device (1+) the entire pressure drop of a dry fluid flow is measured as a function of its volumetric flow, the device (1+) is subsequently operated with a wet fluid flow (5), for which the pressure drop does not exceed the double value of the corresponding pressure drop of the dry fluid flow.

13. A method in accordance with claim 12, wherein the wet fluid flow (5) is reduced when the pre-determined value is exceeded to such an extent, that the pressure drop does not exceed the double of the value of the corresponding pressure drop of the dry fluid flow anymore.

## Revendications

1. Dispositif (1) pour séparer un liquide hors d'un flux de fluide (5), qui est chargé de gouttelettes de liquide et qui peut être guidé à travers des structures de séparation (2) en contre-courant du liquide à séparer, le liquide séparé circulant sur les surfaces des structures de séparation (2), lesdites structures de séparation (2) formant au moins deux étages (21, 22) et chaque structure de séparation (2) comportant une surface d'admission (20a) pour l'entrée du flux de fluide (5), laquelle est agencée plus bas qu'une surface de sortie (20b) correspondante,
**caractérisé en ce qu'**il est prévu un premier étage (21), au niveau de la surface d'admission (20a) duquel est prévu un collecteur (3) pour le liquide (41) reflué hors du premier étage (21), et il est prévu un deuxième étage (22), au niveau de la surface d'admission duquel est prévu un collecteur (3) pour le liquide (42) reflué hors du deuxième étage (22), et **en ce que** les collecteurs (3) sont raccordés chacun à une conduite collectrice (4) via un canal collecteur (32), le collecteur (3) étant formé par une pluralité d'éléments collecteurs (31), lesdits éléments collecteurs (31) étant des goulottes de collecte (35) disposées parallèlement et entre lesquelles sont prévues des ouvertures de passage ou brèches (36) pour une admission directe du flux de fluide dans la structure de séparation (2).

2. Dispositif selon la revendication 1, dans lequel les structures de séparation (2) sont formées chacune par un empilement d'éléments de séparation et/ou une pile de couches qui sont tissées ou tricotées avec du fil, en particulier un fil métallique.

3. Dispositif selon la revendication 1 ou 2, dans lequel au moins un étage comporte un empilement ordonné, ledit empilement formant en particulier une structure à canaux croisés, avec une attache des couches formée par des feuilles ondulées ou pliées en zigzag, qui forment des conduits d'écoulement dans des couches orientées verticalement, sachant que les conduits d'écoulement de couches adjacentes se croisent ouvertement.

4. Dispositif selon l'une quelconque des revendications 1 à 3, dans lequel les structures de séparation (2) ont des surfaces spécifiques de taille différente, sachant qu'en particulier la surface spécifique augmente dans la direction d'écoulement du flux de fluide (5).

5. Dispositif selon l'une quelconque des revendications 1 à 4, dans lequel chaque élément collecteur (31) comporte au moins une surface collectrice (34) et la goulotte de collecte (35) menant vers le canal collecteur (32), le collecteur (3), couvrant la surface d'admission (20a) de la structure de séparation associée, comporte des ouvertures de passage ou brèches (36) pour le flux de fluide, et le passage direct du flux de fluide (5) étant empêché totalement ou jusqu'à au moins 50 % en raison de la partie plane de déviation (33) de l'élément collecteur (31) respectivement adjacent.

6. Dispositif selon la revendication 1 ou 5, dans lequel, compte tenu des déviations du flux de fluide (5), le collecteur (3) remplit une fonction de séparation, en plus de sa fonction de collecte.

7. Dispositif selon l'une quelconque des revendications précédentes, dans lequel les goulottes de collecte (31) sont réalisées sous forme de conduits en V.

8. Appareil (1⁺), comportant un dispositif (1) selon l'une quelconque des revendications 1 à 7, **caractérisé en ce que**, dans une zone, le flux de fluide (5) peut être transformé en courant tourbillonnaire (51), de telle sorte que le liquide peut être séparé, sous l'effet des forces centrifuges, dans une structure de conception appropriée, une telle séparation par centrifugation étant prévue de préférence dans un étage final.

9. Procédé d'exploitation d'un séparateur de gouttelettes (1) à plusieurs étages, qui est un dispositif (1) ou appareil (1⁺) selon l'une quelconque des revendications 1 à 8, **caractérisé en ce que** le liquide séparé dans au moins deux étages (21, 22, 23) est collecté par les collecteurs (3) et est acheminé hors de ceux-ci vers la conduite collectrice (4).

10. Procédé selon la revendication 9, **caractérisé en ce qu'**une séparation est effectuée dans au moins un étage (21) avec une structure de séparation (2) remplie au moins partiellement, une phase continue formée par le liquide séparé étant traversée par le flux de fluide en tant que phase discrète en forme de bulles.

11. Procédé selon la revendication 10, dans lequel le flux de fluide est dimensionné de telle sorte que dans les étages contenant une plus grande quantité de liquide, la chute de pression atteint une valeur qui produit le flux.

12. Procédé selon l'une quelconque des revendications 9 à 11, dans lequel dans l'appareil (1⁺), la totalité de la chute de pression d'un flux de fluide sec est mesurée en fonction du flux volumétrique de celui-ci, l'appareil (1⁺) fonctionne alors avec un flux de fluide (5) mouillé, pour lequel se produit une chute de pression qui ne dépasse pas le double de la valeur de la chute de pression correspondante du flux de fluide sec.

13. Procédé selon la revendication 12, dans lequel, en cas de dépassement vers le haut de la valeur prédéfinie, le flux de fluide (5) mouillé est diminué jusqu'à ce que la chute de pression ne dépasse pas le double de la valeur de la chute de pression correspondante du flux de fluide sec.
